# FASCICULE DE BREVET EUROPEEN

(11) **EP 1 227 967 B1**
(45) Date de publication et mention de la délivrance du brevet: **08.09.2004**
(21) Numéro de dépôt: 00974584.5
(22) Date de dépôt: 27.10.2000
(51) Int. Cl.: B62D 21/15, B60R 19/34

(54) **VEHICULE, NOTAMMENT DE TOURISME, A STRUCTURE D'ENCAISSEMENT DE CHOC ANTI-CHEVAUCHEMENT**
FAHRZEUG, INSBESONDERE PKW, MIT KASTENSTRUKTUR GEGEN AUFKLETTERN BEIM AUFPRALL
VEHICLE, IN PARTICULAR PASSENGER VEHICLE, WITH IMPACT ABSORBING STRUCTURE AVOIDING OVERLAP

(30) Priorité: 08.11.1999 FR 9913996
(43) Date de publication de la demande: 07.08.2002
(73) Titulaire: Renault s.a.s., 92100 Boulogne Billancourt (FR)
(72) Inventeur: YVETOT, Marc, F-75015 Paris (FR); BOUDARD, Emmanuel, F-78960 Voisins le Bretonneux (FR)
(86) Numéro de dépôt international: PCT/FR2000/003002
(87) Numéro de publication internationale: WO 2001/034451

(56) Documents cités:
- EP-A- 0 926 048
- DE-A- 4 230 669

## Description

La présente invention concerne un véhicule automobile, en particulier une voiture de tourisme. Un tel véhicule comprend un habitacle, un pare-chocs placé devant celui-ci dans le sens de marche du véhicule et au moins une structure de support et d'encaissement de choc disposée entre le pare-chocs et l'habitacle, la structure s'étendant pratiquement dans le sens longitudinal du véhicule et comportant deux longerons disposés à la hauteur du pare-chocs, supportant celui-ci à leur extrémité avant, et s'étendant pratiquement dans le sens longitudinal du véhicule en direction de l'habitacle.

De nombreuses propositions ont déjà été faites pour améliorer la sécurité lors de chocs avant entre un véhicule et un obstacle fixe ou mobile, notamment lors de chocs avant entre deux véhicules. Toutes les propositions visent à absorber l'énergie cinétique du choc d'une manière plus ou moins contrôlée et localisée, à l'avant du véhicule, pour éviter des dommages irréparables au niveau des passagers.

Selon le document GB 1532408, on interpose entre le pare-chocs et les longerons des dispositifs absorbeurs d'énergie cinétique, par exemple des vérins hydrauliques ou pneumatiques. Selon d'autres propositions, on utilise divers types de profilés métalliques, notamment sous forme de poutres ou de caissons, destinés à mieux absorber l'énergie cinétique du choc et à avoir un comportement prévisible.

Le document FR 2439124 décrit un véhicule automobile, en particulier un véhicule de tourisme, comportant un habitacle, un pare-chocs placé devant celui-ci dans le sens de marche du véhicule et au moins une structure de support et d'encaissement de choc disposée entre le pare-chocs et l'habitacle, la structure s'étendant pratiquement dans le sens longitudinal du véhicule et comportant deux longerons supérieurs disposés à la hauteur du pare-chocs, supportant celui-ci à leur extrémité avant, et s'étendant pratiquement dans le sens longitudinal du véhicule en direction de l'habitacle, deux longerons inférieurs disposés parallèlement sous les longerons supérieurs et raccordés aux longerons supérieurs par deux supports de liaison, une traverse reliant les deux longerons inférieurs à leur extrémité avant ; les longerons inférieurs sont disposés au niveau du plancher de l'habitacle et raccordés à celui-ci à leur extrémité arrière ; leur extrémité avant est très en retrait par rapport aux extrémités avant des longerons supérieurs et est reliée à ceux-ci par deux supports de liaison obliques. En cas de choc, ce sont essentiellement les longerons supérieurs qui se déforment, les liaisons obliques se redressant verticalement sous le choc ; par la suite, éventuellement, les longerons inférieurs peuvent subir une certaine déformation.

La publication DE-A-4230669 qui forme l'état de la technique le plus proche, selon la préambule de la revendication 1 décrit une structure avant de véhicule qui comporte des longerons supérieurs auxquels sont fixés, par l'intermédiaire de bloc, des longerons inférieurs.

La publication EP-A-0926048 décrit une structure avant de véhicule qui comporte des longerons supérieurs auxquels sont fixés des longerons inférieurs, par l'intermédiaire d'éléments soudés à ces derniers.

Ces dispositifs connus contribuent certainement à atténuer la violence des chocs en canalisant et absorbant l'énergie cinétique, mais ils n'empêchent pas d'autres phénomènes adverses d'intervenir, en particulier le chevauchement d'un véhicule dans l'autre en cas de choc frontal, avec pénétration d'un longeron supérieur d'un véhicule dans le véhicule antagoniste. C'est notamment un risque majeur dans les collisions frontales "à gauche" (pour les conduites à gauche) où les véhicules se font face seulement de moitié. En fait, la structure divulguée par le document FR 2439124 aurait même tendance à aggraver la situation en raison de la position des longerons supérieurs en éperons.

Le but de l'invention est de remédier à ce problème et de proposer un véhicule comprenant une structure d'encaissement et d'absorption de choc, adaptée pour limiter les risques de chevauchement ou de pénétration en cas de choc frontal entre deux véhicules.

L'invention atteint son but grâce à un véhicule automobile, en particulier un véhicule de tourisme, comportant un habitacle, un pare-chocs placé devant celui-ci dans le sens de marche du véhicule et au moins une structure de support et d'encaissement de choc disposée entre le pare-chocs et l'habitacle, la structure s'étendant pratiquement dans le sens longitudinal du véhicule et comportant au moins deux longerons supérieurs disposés à la hauteur du pare-chocs, supportant celui-ci à leur extrémité avant, et s'étendant pratiquement dans le sens longitudinal du véhicule en direction de l'habitacle, au moins deux longerons inférieurs disposés parallèlement sous les longerons supérieurs et raccordés aux longerons supérieurs par deux supports de liaison, les extrémités avant des longerons inférieurs étant sensiblement à l'aplomb des extrémités avant des longerons supérieurs et les supports de liaison étant disposés sensiblement entre les extrémités avant des longerons supérieurs et inférieurs une traverse reliant les deux longerons inférieurs à leur extrémité avant, caractérisé en ce que un dispositif de confinement sans contact permanent est prévue à l'extrémité arrière des longerons inférieurs pour empêcher leur désaxement avec la partie de butée de l'habitacle. Très avantageusement, l'extrémité arrière des longerons inférieurs est disposée pour prendre appui sur une partie de butée de la structure du véhicule en cas de choc avant.

Ainsi, la traverse et les supports de liaison forment un cadre en "U" suspendu à l'aplomb des extrémités avant des longerons supérieurs. Cette structure permet en cas de choc frontal entre deux véhicules, d'empêcher les longerons supérieurs d'un véhicule de passer au-dessus de ceux du véhicule antagoniste, du fait que la voie basse de passage d'efforts, constituée par le cadre en "U", peut "accrocher" des éléments de structure de l'autre véhicule, le groupe moto-propulseur ou la roue. Autrement dit, le cadre en "U" empêche les longerons de se soulever pendant le choc.

On notera qu'on connaît dans le domaine des camions, par exemple par le document EP 0696535, une structure dans laquelle une traverse prévue à l'avant des longerons et le pare-chocs forment un cadre à l'avant du véhicule, mais cette structure prévue essentiellement pour disposer les organes d'accouplement de remorques n'a aucun rôle en matière d'absorption de l'énergie cinétique du choc et, du reste, il n'est pas prévu de longerons inférieurs.

Avantageusement, les longerons inférieurs sont entièrement suspendus aux longerons supérieurs, leurs extrémités arrière étant disposées à distance d'une partie de butée de la structure du véhicule, avec laquelle ils n'entrent en contact qu'en cas de choc.

Les longerons inférieurs sont suspendus aux longerons supérieurs, outre par les supports de liaison, par au moins un tirant.

Avantageusement, le longeron inférieur côté moteur est suspendu par un tirant unique et le longeron inférieur côté boîte de vitesse est suspendu par deux tirants.

Les longerons inférieurs sont réalisés de manière à pouvoir absorber l'énergie cinétique du choc, par exemple sous la forme de corps creux. Ils comportent de préférence deux sections longitudinales de compressibilité différente.

L'invention sera mieux comprise grâce à la description suivante, se référant aux dessins annexés sur lesquels :
- la figure 1 est une vue en perspective simplifiée de trois-quarts avant des éléments principaux de la structure d'encaissement de l'invention,
- la figure 2 est une vue en perspective éclatée de trois-quarts arrière et en arraché partiel de la même structure.
- La figure 3 représente un détail du dispositif de confinement prévu à l'arrière des longerons inférieurs.

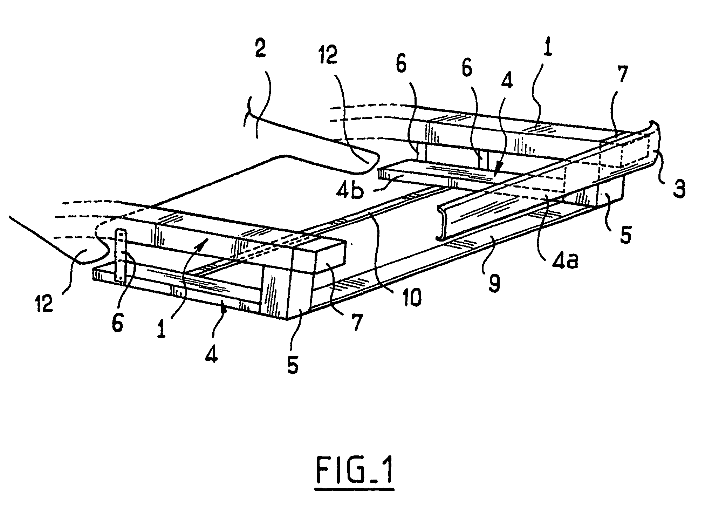

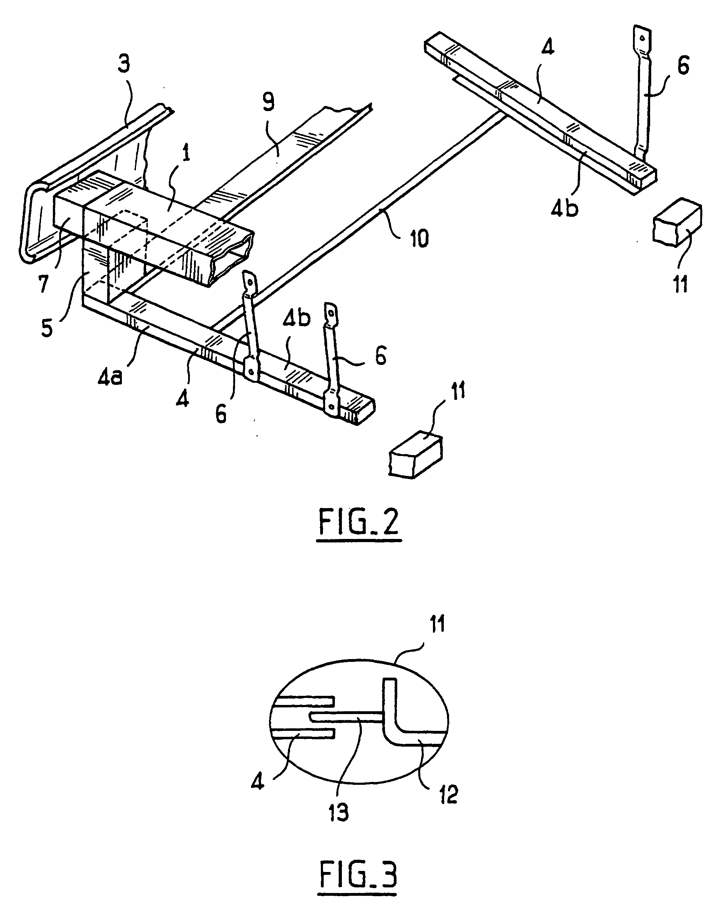

Les figures 1 et 2 montrent les longerons supérieurs 1 réalisés par exemple sous forme de corps creux, s'appuyant à leur extrémité arrière, directement ou indirectement, à un élément de structure du véhicule (ici par exemple au berceau moteur 2) et portant à leur extrémité avant le pare-chocs 3. Les longerons supérieurs 1 supportent en suspension les longerons inférieurs 4, ou longeronnets, grâce à d'une part les supports de liaison ou pendeloques 5 et d'autre part un ou plusieurs tirants 6. Entre le pare-chocs 3 et l'extrémité du longeron supérieur 1, est fixé un élément d'absorption démontable 7 chargé de dissiper l'énergie cinétique des chocs à faible vitesse, environ jusau'à 15 km/h, et de pouvoir ensuite réparer le véhicule à un coût le plus faible possible. Une traverse 9 est disposée entre les deux pendeloques 5. Les pendeloques 5 sont disposées sensiblement aux extrémités avant des longeronnets 4 et des longerons supérieurs 1. Une telle disposition permet de dissiper le plus tôt possible l'énergie cinétique au-delà des 15 km/h. Le longeron situé du côté boîte de vitesse, c'est-à-dire le longeron gauche pour une conduite à gauche comporte deux tirants 6, l'un situé près de l'arrière et l'autre situé sur une partie intermédiaire du longeronnet 4. Du côté moteur, l'autre longeron supérieur ne comprend qu'un tirant 6, placé à l'arrière du longeronnet 4. Les longeronnets 4 sont avantageusement réalisés sous forme de corps creux permettant l'absorption d'énergie par compression et de préférence en deux sections 4a, 4b de compressibilité différente : la section 4a située à l'avant du longeronnet est déformable tandis que la section arrière 4b est peu compressible. Un tirant transversal 10 peut relier les deux longeronnets 4, entre les sections de compressibilité différente. A titre d'exemple, les fixations du tirant transversal 10 sur les longeronnets 4 sont localisées sensiblement dans la partie médiane de la zone 4a desdits longeronnets. A l'arrière des longeronnets 4, des dispositifs de confinement 11 sont interposés entre les longeronnets 4 et la partie de butée 12 du berceau moteur, dont ils sont éloignés par un jeu éliminé pendant un choc. Le principe du dispositif de confinement 11 est représenté sur la figure 3 qui montre un doigt 13 lié à la partie de butée 12 et pénétrant sans contact (en temps normal) dans un logement creux à l'extrémité du longeronnet 4 avec un jeu tenant compte des dispersions et des débattements, permettant de rattraper les jeux de montage. La désolidarisation des longeronnets d'avec le berceau moteur empêche la transmission des vibrations. Le doigt 13 évite l'échappement du longeronnet 4 pendant sa mise en compression en cas de choc. Un matériau élastique peut éventuellement enrober le doigt 13.

## Revendications

1. Véhicule automobile, en particulier véhicule de tourisme, comportant un habitacle, un pare-chocs (3) placé devant celui-ci dans le sens de marche du véhicule et au moins une structure de support et d'encaissement de choc disposée entre le pare-chocs et l'habitacle, la structure s'étendant pratiquement dans le sens longitudinal du véhicule et comportant au moins deux longerons supérieurs (1) disposés à la hauteur du pare-chocs (3), supportant celui-ci à leur extrémité avant, et s'étendant pratiquement dans le sens longitudinal du véhicule en direction de l'habitacle, au moins deux longerons inférieurs (4) disposés parallèlement sous les longerons supérieurs (1) et raccordés aux longerons supérieurs par deux supports de liaison (5) les extrémités avant des longerons inférieurs (4) sont sensiblement à l'aplomb des extrémités avant des longerons supérieurs (1) et en ce que les deux supports de liaison (5) sont disposés sensiblement entre les extrémités avant des longerons supérieurs (1) et inférieurs (4), une traverse (9) reliant les deux longerons inférieurs (4) à leur extrémité avant, **caractérisé en ce qu'**un dispositif (11) de confinement sans contact permanent est prévu à l'extrémité arrière des longerons inférieurs (4) pour empêcher leur désaxement avec une partie de butée (12) de l'habitacle.

2. Véhicule selon la revendication 1, **caractérisé en ce que** l'extrémité arrière des longerons inférieurs (4) est disposée pour prendre appui sur la partie de butée (12) d'un élément de structure en cas de choc avant.

3. Véhicule selon l'une quelconque des revendications 1 ou 2, **caractérisé en ce que** les longerons inférieurs (4) sont entièrement suspendus aux longerons supérieurs (1), leurs extrémités arrière étant disposées à distance de la partie de butée (12).

4. Véhicule selon la revendication 3, **caractérisé en ce que** les longerons inférieurs (4) sont suspendus aux longerons supérieurs (1), outre par les supports de liaison (5), par au moins un tirant (6).

5. Véhicule selon la revendication 4, **caractérisé en ce que** le longeron inférieur (4) côté moteur est suspendu par un tirant unique (6).

6. Véhicule selon la revendication 4, **caractérisé en ce que** le longeron inférieur (4) côté boîte de vitesses est suspendu par deux tirants (6).

7. Véhicule selon l'une quelconque des revendications 1 à 6, **caractérisé en ce que** les longerons inférieurs (4) comportent deux sections longitudinales (4a, 4b) de compressibilité différente.

8. Véhicule selon l'une quelconque des revendications 1 à 7, **caractérisé en ce que** les longerons inférieurs (4) sont reliés par un tirant transversal (10).

9. Véhicule selon les revendication 7 et 8 prises en combinaison, **caractérisé en ce que** le tirant transerversal (10) est fixé sensiblement dans la partie médiane de la zone (4a) des longerons inférieurs.

10. Véhicule selon l'une quelconque des revendications 1 à 9, **caractérisé en ce qu'**un élément d'absorption démontable (7) est disposé entre le pare-chocs (3) et l'extrémité du longeron supérieur (1).

## Patentansprüche

1. Automobiles Fahrzeug, insbesondere Personenkraftwagen, aufweisend eine Fahrgastzelle, eine Stoßstange (3), welche vor dieser in Fahrtrichtung des Fahrzeugs angeordnet ist und wenigstens einen Trageaufbau zum Auffangen eines Aufpralls, welcher zwischen der Stoßstange und der Fahrgastzelle angeordnet ist, wobei sich der Aufbau praktisch in der longitudinalen Richtung des Fahrzeugs erstreckt und wenigstens zwei obere Längsträger (1) aufweist, welche in der Höhe der Stoßstange (3) angeordnet sind, welche diese an ihrem vorderen Ende tragen, und welche sich praktisch in der longitudinalen Richtung des Fahrzeugs in Richtung der Fahrgastzelle erstrecken, wenigstens zwei untere Längsträger (4), welche parallel unter den oberen Längsträgern (1) angeordnet sind und verbunden sind mit den oberen Längsträgern durch zwei Verbindungsträger (5), wobei die vorderen Enden der unteren Längsträger (4) im Wesentlichen in der Senkrechten zu den vorderen Enden der oberen Längsträger (1) sind und wobei die zwei Verbindungsträger (5) im Wesentlichen zwischen den vorderen Enden der oberen (1) und unteren (4) Längsträger angeordnet sind, wobei ein Querstück (9) die zwei unteren Längsträger (4) an ihrem vorderen Ende verbindet,
**dadurch gekennzeichnet, dass** eine Begrenzungsvorrichtung (11) ohne permanenten Kontakt am hinteren Ende der unteren Längsträger (4) vorgesehen ist, um mit einem Anschlagbereich (12) der Fahrgastzelle ihre Deachsierung zu verhindern.

2. Fahrzeug gemäß Anspruch 1, **dadurch gekennzeichnet, dass** das hintere Ende der unteren Längsträger (4) so angeordnet ist, dass es sich auf dem Anschlagbereich (12) eines Elements des Aufbaus abstützt im Falle eines vorderen Aufpralls.

3. Fahrzeug gemäß einem der Ansprüche 1 oder 2, **dadurch gekennzeichnet, dass** die unteren Längsträger (4) vollständig an den oberen Längsträgem (1) hängen, wobei ihre hinteren Enden in einem Abstand von dem Anschlagbereich (12) angeordnet sind.

4. Fahrzeug gemäß Anspruch 3, **dadurch gekennzeichnet, dass** die unteren Längsträger (4) an den oberen Längsträgern (1) hängen, neben den Verbindungsträgem (5) durch wenigstens eine Strebe (6).

5. Fahrzeug gemäß Anspruch 4, **dadurch gekennzeichnet, dass** der motorseitige untere Längsträger (4) durch eine einzige Strebe 6 aufgehängt ist.

6. Fahrzeug gemäß Anspruch 4, **dadurch gekennzeichnet, dass** der getriebeseitige untere Längsträger (4) durch zwei Streben (6) aufgehängt ist.

7. Fahrzeug gemäß einem der Ansprüche 1 bis 6, **dadurch gekennzeichnet, dass** die unteren Längsträger (4) zwei longitudinale Bereiche (4a, 4b) von unterschiedlicher Kompressibilität aufweisen.

8. Fahrzeug gemäß einem der Ansprüche 1 bis 7, **dadurch gekennzeichnet, dass** die unteren Längsträger (4) durch eine transversale Strebe (10) verbunden sind.

9. Fahrzeug gemäß den Ansprüchen 7 und 8 in Kombination genommen, **dadurch gekennzeichnet, dass** die transversale Strebe (10) im Wesentlichen im mittleren Teil der Zone (4a) der unteren Längsträger befestigt ist.

10. Fahrzeug gemäß einem der Ansprüche 1 bis 9, **dadurch gekennzeichnet, dass** ein demontierbares Absorptionselement (7) zwischen der Stoßstange (3) und dem Ende des oberen Längsträgers (1) angeordnet ist.

## Claims

1. A motor vehicle, in particular a passenger vehicle, comprising a passenger compartment, a bumper (3) positioned in front thereof in the direction of travel of the vehicle and at least one support and impact-withstanding structure disposed between the bumper and the passenger compartment, the structure extending practically in the longitudinal direction of the vehicle and comprising at least two upper longitudinal members (1) disposed at the height of the bumper (3) and supporting same at their front ends and extending practically in the longitudinal direction of the vehicle towards the passenger compartment, at least two lower longitudinal members (4) disposed in parallel relationship and beneath the upper longitudinal members (1) and connected to the upper longitudinal members by two connecting supports (5), the front ends of the lower longitudinal members (4) are disposed substantially in vertical alignment with the front ends of the upper longitudinal members (1) and the two connecting supports (5) are disposed substantially between the front ends of the upper (1) and lower (4) longitudinal members, a transverse portion (9) connecting the two lower longitudinal members (4) at their front ends, **characterised in that** a confinement device (11) without permanent contact is provided at the rear ends of the lower longitudinal members (4) to prevent misalignment thereof with an abutment portion (12) of the passenger compartment.

2. A vehicle according to claim 1 **characterised in that** the rear end of the lower longitudinal members (4) is arranged to bear against the abutment portion (12) of a structural element in the event of a front-end impact.

3. A vehicle according to one of claims 1 and 2 **characterised in that** the lower longitudinal members (4) are entirely suspended from the upper longitudinal members (1), their rear ends being disposed at a spacing from the abutment portion (12).

4. A vehicle according to claim 3 **characterised in that** the lower longitudinal members (4) are suspended from the upper longitudinal members (1), besides by the connecting supports (5), by at least one tie rod (6).

5. A vehicle according to claim 4 **characterised in that** the lower longitudinal member (4) at the engine side is suspended by a single tie rod (6).

6. A vehicle according to claim 4 **characterised in that** the lower longitudinal member (4) at the gearbox side is suspended by two tie rods (6).

7. A vehicle according to any one of claims 1 to 6 **characterised in that** the lower longitudinal members (4) comprise two longitudinal sections (4a, 4b) of different levels of compressibility.

8. A vehicle according to any one of claims 1 to 7 **characterised in that** the lower longitudinal members (4) are connected by a transverse tie rod (10).

9. A vehicle according to claims 7 and 8 in combination **characterised in that** the transverse tie rod (10) is fixed substantially in the central portion of the zone (4a) of the lower longitudinal members.

10. A vehicle according to any one of claims 1 to 9 **characterised in that** a removable absorbing element (7) is disposed between the bumper (3) and the end of the upper longitudinal member (1).
